(19) **Europäisches Patentamt / European Patent Office / Office européen des brevets**

(11) **EP 3 986 144 B1**

(12) **EUROPEAN PATENT SPECIFICATION**

(45) Date of publication and mention
of the grant of the patent:
**24.09.2025 Bulletin 2025/39**

(21) Application number: **20733617.3**

(22) Date of filing: **19.06.2020**

(51) International Patent Classification (IPC):
**A23C 9/12** *(2006.01)* **A23C 21/02** *(2025.01)*
**A23C 21/06** *(2025.01)*

(52) Cooperative Patent Classification (CPC):
**A23C 9/1216; A23C 9/1209; A23C 21/02;
A23C 21/06; A23J 3/08; A23J 3/10**

(86) International application number:
**PCT/EP2020/067099**

(87) International publication number:
**WO 2020/254576 (24.12.2020 Gazette 2020/52)**

(54) **CROSS-LINKED MILK PROTEIN CO-PRECIPITATE**

VERNETZTES MILCHPROTEIN-CO-PRÄZIPITAT

CO-PRÉCIPITÉ DE PROTÉINE DE LAIT RÉTICULÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2019 EP 19181498**

(43) Date of publication of application:
**27.04.2022 Bulletin 2022/17**

(73) Proprietor: **Novozymes A/S
2880 Bagsvaerd (DK)**

(72) Inventor: **NIELSEN, Per, Munk,
2880 Bagsvaerd (DK)**

(74) Representative: **NVS EPO Representatives
Krogshoejvej 36
2880 Bagsvaerd (DK)**

(56) References cited:
**WO-A1-2008/071841** **US-A1- 2007 020 371**
**US-A1- 2014 220 178**

• **DATABASE WPI Week 200064, Derwent World
Patents Index; AN 2000-659140, XP002796103**

Remarks:
•The complete document including Reference
Table(s) and the Sequence Listing(s) can be
downloaded from the EPO website
•The file contains technical information submitted
after the application was filed and not included in this
specification

**Description**

**Reference to sequence listing**

This application contains a Sequence Listing in computer readable form. The computer readable form is incorporated herein by reference.

## FIELD OF THE INVENTION

The present invention relates to preparation of a cross-linked milk protein co-precipitate, which includes treatment with a transglutaminase, and use of the cross-linked milk protein co-precipitate in production of acidified milk products.

## BACKGROUND OF THE INVENTION

Amino acids of animal- and plant-based proteins may be crosslinked by enzymes, such as transglutaminase. The transglutaminase enzyme (EC 2.3.2.13) catalyzes the generation of covalent linkages between the glutamine and lysine amino acid residues present in the protein molecules.

The use of a texture-modifying transglutaminase enzyme in the manufacture of acidified milk products such as yoghurt is known. The use of a transglutaminase enzyme serves to increase the viscosity and to reduce syneresis. Use of transglutaminase thus enables a reduction in the protein content of, e.g., yoghurt without having a negative effect on the texture.

Sodium caseinate is generally prepared by separating casein from milk and converting it to sodium caseinate.

WO2007/026053 (Valio) discloses that addition of transglutaminase-treated cation-exchanged fat-free milk powder to fat-free yoghurt milk led to an increased viscosity of the fat-free yoghurt and reduced whey-separation (syneresis).

WO2007/060288 (Valio) discloses a method of manufacturing, e.g., yoghurt wherein a transglutaminase enzyme, an enzyme-activating compound such as yeast extract or glutathione and an acidifying agent is added to a protein source under such circumstances that the enzyme is active during acidification. The protein source may be milk, or it may be milk having a decreased protein content by adding, e.g., milk permeate, whey and/or a lactose fraction.

WO2014/001642 (Valio) discloses a method for producing a casein protein product having a microstructure which is similar to a meat analogue, wherein a casein concentrate starting material is treated with a transglutaminase.

Guyot and Kulozik, International Dairy Journal 21 (2011) 628-635, has investigated the effect of addition of transglutaminase-treated skim milk powder to yoghurt milk prior to acidification. Protein fortified skim milk was heat treated to inactivate indigenous TGase inhibitor, followed by TGase treatment, enzyme inactivation and spray drying. The TGase treated skim milk powder was added to skim milk and yoghurt was produced. This was seen as an alternative to TGase treatment of the entire yoghurt milk. Higher viscosities and lower serum loss was shown compared to yoghurt samples produced with addition of untreated SMP. Also, with the use of TGase-treated SMP, the same level of viscosity was reached with less milk powder addition to the yoghurt milk. Thus, yoghurt with comparable properties in respect of structural behaviour was produced with reduced amount of SMP. The authors suggest to further investigate the influence of different casein to whey protein ratios in the milk powders.

It is the object of the present invention to produce a yoghurt having good structural properties, e.g., in respect of viscosity, firmness and/or cohesiveness, compared to standard yoghurts having the same level of protein content. In particular, production of such yoghurt without increasing the protein content is desirable.

It is a further object to produce a source of cross-linked milk protein which may be used, e.g., for improving the textural properties of yoghurt such as yoghurt having a low to medium protein content, e.g., yoghurt having the same or lower protein content as milk.

## SUMMARY OF THE INVENTION

It has surprisingly been found that a cross-linked milk protein co-precipitate having beneficial properties can be obtained by heating a milk substrate followed by lowering the pH, separating precipitated protein and treating said protein with transglutaminase. Preferably, a pasteurization step is included after the transglutaminase treatment.

The precipitated milk protein is separated from the whey comprising, e.g., calcium and lactose. A lower content of lactose in the end-product where the milk protein co-precipitate is to be used is desired by many consumers for various reasons, one of them being that a product having a lower content of lactose will have reduced carbohydrate content and reduced calories.

The thus obtained cross-linked milk protein co-precipitate can advantageously be used in the production of acidified milk products such as yoghurt for improving viscosity and consistency. When using the milk protein co-precipitate of the invention, an acidified milk product having a good texture can be obtained even with a relatively low content of milk protein.

A low milk protein content is beneficial from a cost perspective.

Another advantage of the methods of the invention is that the transglutaminase enzyme is inactivated by the pasteurization treatment before acidification of the yoghurt. This means that no labelling is required since there is no active enzyme in the yoghurt. Another advantage is that the heat treatment of the milk substrate will inactivate any endogenous transglutaminase inhibitor in the milk prior to the transglutaminase treatment. And further, when comparing to a process where all the protein in the yoghurt milk is treated with transglutaminase, the method of the invention where only part of the protein is treated results in the use of less transglutaminase enzyme and therefore reduced costs.

Another advantage compared to existing methods where, e.g., spray-dried skim milk powder is used to improve the texture of yoghurt, is that in the process of the invention, the steps of drying and reconstitution can be avoided. Especially drying is costly. A dairy plant producing, e.g., yoghurt according to a method of the invention can use its own milk resources for producing the cross-linked milk protein co-precipitate and add it back to the yoghurt milk before acidification.

The present invention is therefore directed to a method for preparing a cross-linked milk protein co-precipitate, the method comprising:

(a) heating a milk substrate comprising casein and whey protein under conditions so that more than 50% w/w, preferably more than 80% w/w, of the whey protein is denatured;

(b) adjusting the pH of the heated milk substrate of step (a) to a pH of 4-4.7, preferably 4.5-4.7, thereby precipitating at least 80% w/w of the milk protein;

(c) separating a fraction comprising the precipitated milk protein of step (b), thereby obtaining a milk protein co-precipitate, and optionally adding water;

(d) adjusting the pH of the milk protein co-precipitate of step (c) to a pH of 6-7 thereby dissolving at least 80% w/w of the precipitated milk protein;

(e) treating the dissolved milk protein co-precipitate of step (d) with a transglutaminase thereby obtaining a cross-linked milk protein co-precipitate.

In a preferred embodiment, said method further comprises:
(f) pasteurizing the cross-linked milk protein co-precipitate of step (e).

The invention is also directed to a method for preparing an acidified milk product, the method comprising:

(a) mixing the cross-linked milk protein co-precipitate defined above with a milk substrate to obtain a mixed milk substrate, wherein 10-30% of total protein in the mixed milk substrate is obtained from the cross-linked milk protein co-precipitate; and

(b) acidifying the mixed milk substrate of step (a) to obtain an acidified milk product.

## DETAILED DESCRIPTION OF THE INVENTION

The present invention is directed to a method for preparing a cross-linked milk protein co-precipitate, the method comprising:

(a) heating a milk substrate comprising casein and whey protein under conditions so that more than 50% w/w, preferably more than 80% w/w, of the whey protein is denatured;

(b) adjusting the pH of the heated milk substrate of step (a) to a pH of 4-4.7, preferably 4.5-4.7, thereby precipitating at least 80% w/w of the milk protein;

(c) separating a fraction comprising the precipitated milk protein of step (b), thereby obtaining a milk protein co-precipitate, and optionally adding water;

(d) adjusting the pH of the milk protein co-precipitate of step (c) to a pH of 6-7 thereby dissolving at least 80% w/w of the precipitated milk protein;

(e) treating the dissolved milk protein co-precipitate of step (d) with a transglutaminase thereby obtaining a cross-linked milk protein co-precipitate.

In a preferred embodiment, said method further comprises:
(f) pasteurizing the cross-linked milk protein co-precipitate of step (e).
In another embodiment, said method further comprises:
(ff) concentrating and/or drying the cross-linked milk protein co-precipitate of step (e) or the pasteurized cross-linked milk protein co-precipitate of step (f).
In another embodiment, the cross-linked milk protein co-precipitate of step (e) or the pasteurized cross-linked milk protein co-precipitate of step (f) is not subjected to drying.
In the context of the present invention, a milk protein co-precipitate is casein comprising coprecipitated whey protein. The milk protein co-precipitate is obtained by denaturing whey protein in a milk substrate by heat treatment followed by acidification to co-precipitate casein and denatured whey protein.
Casein is a family of related phosphoproteins which is commonly found in mammalian milk. Casein comprises about 80% of the protein in cow's milk. Casein is generally known to precipitate at pH 4.6 and 20°C.
As used herein, the term "whey protein" is the group of milk proteins that remain soluble in milk serum or whey after precipitation of casein at pH 4.6 and 20°C (Farrell et al., Nomenclature of the Proteins of Cows' Milk - Sixth Revision, Journal of Dairy Science, Volume 87, Issue 6, June 2004, Pages 1641-1674).
Denatured whey protein will co-precipitate with the casein at or around pH 4.6.
As used herein, the term "milk substrate" may encompass any milk or milk product obtained from a mammal, preferably cow milk, ewe milk or goat milk, more preferably cow milk. In one embodiment, the milk substrate may be full-fat milk, reduced fat milk such as 1% fat milk, 0.1% fat milk, semi-skimmed milk or skimmed milk. The milk substrate may be reconstituted skim milk powder.
The milk substrate may have been standardized and/or homogenized. The milk substrate may have been pasteurized or otherwise heat-treated.
The protein content in the milk substrate is preferably at least 3.5%.
In step (a) of the methods of the invention, the milk substrate comprising casein and whey protein is heated under conditions so that more than 50% w/w, preferably more than 80% w/w, of the whey protein is denatured.
Most of the whey protein can be denatured upon heating and will then precipitate, e.g., at pH 4.6. To determine the percentage of whey protein which has been denatured in step (a), any method known in the art may be used. E.g., the method described in Fang Qian, Jiayue Sun, Di Cao, Yanfeng Tuo, Shujuan Jiang, and Guangqing Mu, Korean J Food Sci Anim Resour. 2017; 37(1): 44-51. Here, the native whey protein is analyzed using a Native-PAGE technique.
Alternatively, the relative amount of whey protein in the supernatant fluid of the milk substrate before heating (W1) and after heating in step (a) (W2) may be determined and the ratio S of denatured whey protein (%) calculated as:

$$S= (W1-W2)*100/W1 \%$$

W1 may be determined by taking a sample of the milk substrate before heating and determining the total amount of soluble protein before and after precipitation of casein at pH 4.6 and 20°C. Likewise, W2 may be determined by taking a sample of the milk substrate after heating (step (a)) and determining the total amount of soluble protein before and after precipitation of casein and denatured whey protein at pH 4.6 and 20°C.
In step (a) of the methods of the invention, the milk substrate comprising casein and whey protein may be heated to a temperature of 80-100°C, preferably 85-95°C, for 1-15 minutes, preferably 5-15 minutes.
For the avoidance of any possible doubt: In the context of the present invention, when referring to any of steps (a)-(f), this refers to steps (a)-(f) of the method for preparing a cross-linked milk protein co-precipitate described above, but also to steps (a)-(f) of the method for preparing an acidified milk product described below. The method steps (a)-(f) are the same in both methods and therefore any preferred embodiment of any of steps (a)-(f) applies equally well to the method for preparing a cross-linked milk protein co-precipitate and to the method for preparing an acidified milk product.
In between the heat treatment of step (a) and the pH adjustment of step (b), the heated milk substrate may be cooled, e.g. to 15-40°C or to 20-25°C, such as to room temperature.
In step (b), pH of the heated milk substrate of step (a) is adjusted to a pH of 4-4.7, preferably 4.5-4.7, thereby precipitating at least 80% w/w of the milk protein. For the avoidance of doubt, this means that at least 80% w/w of the total amount of casein and whey protein is precipitated.
The pH adjustment in step (b) may be done using any acid known in the art, e.g. HCl or lactic acid.
In between the pH adjustment of step (b) and the separation of step (c), the pH adjusted milk substrate may be heated, e.g., to 40-60°C, and/or stirred.
The separation of step (c) may be performed by any method known in the art, e.g., by filtration, decanting or centrifugation.

The pH adjustment in step (d) may be done using any base known in the art, e.g. NaOH.

Water may be added in any of steps (c) and/or (d), preferably after step (c) and before or during step (d).

The temperature may be adjusted to e.g. 40-60°C before, during or after step (d) and/or during or after step (e).

The transglutaminase treatment of step (e) may be performed at a temperature of, e.g., 30-60°C. The skilled person will know which temperature to choose depending on the temperature optimum of the enzyme.

The transglutaminase may be added at a concentration of 0.1-5 TGHU(A) per g milk protein, preferably 0.2-1 TGHU(A) per g milk protein. The dosage will depend on parameters such as the temperature and the incubation time. The skilled person will know how to determine the optimal enzyme dosage.

The transglutaminase treatment of step (e) may be performed, e.g., for 30 minutes to 3 hours. The skilled person will know how to adjust the treatment time according to the treatment temperature and the amount of enzyme used.

Pasteurization (step (f)) may be performed, e.g., at 85°C for 15 seconds. This pasteurization can be carried out by adding the cross-linked co-precipitate to the yoghurt milk and pasteurizing the total mixture. In that case pasteurization time and temperature can be for example 5 minutes at 95°C, 10 minutes at 90°C, or 20 minutes at 85°C, or other time/temperature combinations used in the production of yoghurt.

Disclosed herein is a cross-linked milk protein co-precipitate characterized by comprising casein and whey protein which is crosslinked by iso-peptide cross-linking bonds between glutamine and lysine.

The formation of iso-peptide cross-linking bonds between glutamine and lysine in the casein and whey protein may be determined according to MASAO MOTOKI and NORIKI NIO (1983) Crosslinking Between Different Food Proteins by Transglutaminase, J. Food.Sci., vol 48, pp. 561-566.

Disclosed herein is a cross-linked milk protein co-precipitate comprising casein and whey protein, where the degree of protein polymerization is at least 20%.

The degree of protein polymerization is a measure of the transglutaminase reaction. It may be determined using gel permeation chromatography according to Martin P. Bönisch, Manfred Huss, Sabine Lauber, Ulrich Kulozik (2007) Yoghurt gel formation by means of enzymatic protein cross-linking during microbial fermentation, Food Hydrocolloids, Vol 21 (4), p- 585-595.

Disclosed herein is the use of a transglutaminase to prepare a cross-linked milk protein co-precipitate.

Disclosed herein is the use of the cross-linked milk protein co-precipitate obtainable by the methods described above in the preparation of an acidified milk product. Disclosed herein is the use of the cross-linked milk protein co-precipitate obtainable by the methods described above to increase the viscosity of an acidified milk product.

In one embodiment, the invention is directed to a method for preparing an acidified milk product, the method comprising mixing a cross-linked milk protein co-precipitate obtained by the method described above with a milk substrate to obtain a mixed milk substrate, wherein 10-30% of total protein in the mixed milk substrate is obtained from the cross-linked milk protein co-precipitate; and acidifying the mixed milk substrate to obtain an acidified milk product.

In one embodiment, the invention is directed to a method for preparing an acidified milk product, the method comprising:

(a) heating a first milk substrate comprising casein and whey protein under conditions so that more than 50% w/w, preferably more than 80% w/w, of the whey protein is denatured, preferably by heating to a temperature of 80-100°C for 1-15 minutes;

(b) adjusting the pH of the heated milk substrate of step (a) to a pH of 4-4.7, preferably 4.5-4.7, thereby precipitating at least 80% w/w of the milk protein;

(c) separating a fraction comprising the precipitated milk protein of step (b), thereby obtaining a milk protein co-precipitate, and optionally adding water;

(d) adjusting the pH of the milk protein co-precipitate of step (c) to a pH of 6-7 thereby dissolving at least 80% w/w of the precipitated milk protein;

(e) treating the dissolved milk protein co-precipitate of step (d) with a transglutaminase thereby obtaining a cross-linked milk protein co-precipitate;

(f) pasteurizing the cross-linked milk protein co-precipitate of step (e) or the mixed milk substrate of step (g);

(g) mixing the cross-linked milk protein co-precipitate of step (e) or the pasteurized cross-linked milk protein co-precipitate of step (f) with a second milk substrate to obtain a mixed milk substrate, wherein 10-30% of total protein in the mixed milk substrate is obtained from the cross-linked milk protein co-precipitate of step (e); and

(h) acidifying the mixed milk substrate of step (f) or (g) to obtain an acidified milk product.

For the avoidance of any possible doubt, the pasteurization step (f) may be performed before or after step (g). I.e., the cross-linked milk protein co-precipitate of step (e) may be pasteurized (step (f)) and then mixed with a second milk substrate (step (g)). Or the cross-linked milk protein co-precipitate of step (e) may be mixed with a second milk substrate (step (g)) and the mixed milk substrate then pasteurized (step (f)).

An acidified milk product in the context of the present invention is a milk-based product which is produced by acidification.

In one embodiment, acidification is performed by incubating with a lactic acid bacterium, preferably of the genus *Streptococcus, Lactococcus, Lactobacilllus, Leuconostoc, Pseudoleuconos-toc, Pediococcus, Propionibacterium, Enterococcus, Brevibacterium,* or *Bifidobacterium* or any combination thereof. Acidification by incubating with one or more lactic acid bacteria may be referred to as fermentation.

In another embodiment, acidification is performed by incubating with a chemical acidifier, preferably glucono delta-lactone (GDL).

The acidified milk product may be a spoonable acidified milk product, e.g. stirred yoghurt or set-type yoghurt, or a drinkable acidified milk product, e.g. drinking yoghurt. Preferably, the acidified milk product is yoghurt, set-type yoghurt, stirred yoghurt, drinking yoghurt or fermented milk.

In one embodiment, the acidified milk product may be yoghurt, set-type yoghurt, stirred yoghurt, drinking yoghurt, fermented milk, greek yoghurt, sour cream, quark, fresh cheese or cream cheese. In another embodiment, the acidified milk product may be yoghurt, set-type yoghurt, stirred yoghurt, drinking yoghurt, fermented milk, greek yoghurt, sour cream or quark. In a preferred embodiment, the acidified milk product may be yoghurt, set-type yoghurt, stirred yoghurt, drinking yoghurt or fermented milk.

Stirred yoghurt may be produced by carrying out acidification in fermentation tanks where the formed acid gel is disrupted e.g. by agitation after acidification when the desired pH has been obtained. The stirred product may be partially cooled to 20-30°C and flavoring ingredients may be added. The stirred product is pumped to filling line and filled in retail containers. The stirred yoghurt product may then be cooled and then stored.

A set yogurt may be acidified in retail container and not agitated after acidification. After acidification, a set yogurt may be cooled and then stored. The cooling may be carried out in blast chiller tunnel or in a refrigerated storage room.

If using a chemical acidifier, the desired pH may be, e.g., around pH 4.5.

If acidification is performed using fermentation with a microorganism, the pH after acidification may preferably be between 4 and 5.

In one embodiment, the acidified milk product is cooled, preferably immediately.

A stirred yoghurt may be cooled down to approx. 20-25°C in the fermentation tank. Then, agitation, e.g. by stirring, may be performed to break the gel. The yoghurt may then be pumped to the filling line followed by a second cooling step to storage temperature approximately 5°C by blast chilling in cooling tunnels or slower in a refrigerated storage room.

Alternatively, for stirred yoghurt, the acidified product may be first stirred to break the gel, then cooled down to approximately 20-25°C by heat exchanger in the line towards the filling station, and then in a second cooling step cooled down to storage temperature approximately 5°C by blast chilling in cooling tunnels or slower in a refrigerated storage room.

The process for set yoghurt may be: After acidification in retail pot (carried out in tempered room), the yoghurt is cooled down to storage temperature approximately 5°C by blast chilling in cooling tunnels or slower in a refrigerated storage room.

The method of the invention for preparing an acidified milk product may further include a storage step after acidification. This may be carried out after agitation, e.g. by stirring or pumping, and/or cooling (one or more times), preferably after both. Storage may be carried out at a low temperature, preferably less than 10°C, more preferably 0-10°C, such as 4-6°C.

The acidification in step (h) is performed until the desired pH is reached. It is well-known in the art how to choose the optimal temperature and incubation time for the acidification. The acidification may be performed, e.g., at 40-45°C for 3-10 hours, such as for 4-7 hours. Sometimes lower temperatures such as down to 32°C may be used for mesophilic cultures.

In a preferred embodiment, the mixed milk substrate is acidified to below pH 5.

In another preferred embodiment, the acidified milk product has a protein content of 1-4%, such as 2-4% or 3-4%.

In another preferred embodiment, the acidified milk product has an increased viscosity compared to an acidified milk product having the same protein content but prepared without addition of the cross-linked milk protein co-precipitate to the milk substrate prior to acidification.

In another preferred embodiment, the acidified milk product has an increased viscosity compared to an acidified milk product having the same protein content and prepared in the same way but without the transglutaminase treatment.

In another preferred embodiment, the acidified milk product has an increased viscosity compared to an acidified milk product having the same protein content and prepared in the same way but without the heating step (a).

Transglutaminase

The transglutaminase to be used in the methods of the invention may be obtained from any source, in particular from a filamentous fungus or yeast, or from a bacterium.

The transglutaminase may, e.g., be derived from a strain of *Agaricus*, e.g. *A. bisporus; Asco-vaginospora; Aspergillus*, e.g. *A. niger, A. awamori, A. foetidus, A. japonicus, A. oryzae; Candida; Chaetomium; Chaetotomastia; Dictyostelium*, e.g. *D. discoideum; Fusarium*, e.g. *F. ox-ysporum, F. solani, F. sp.; Kluveromyces*, e.g. *K. fragilis, K. lactis; Mucor*, e.g. *M. javanicus, M. mucedo, M. subtilissimus; Neurospora*, e.g. *N. crassa; Rhinocladiella; Rhizomucor*, e.g. *R. pusil-lus; Rhizopus*, e.g. *R. arrhizus, R. japonicus, R. stolonifer; Sclerotinia*, e.g. *S. libertiana; Torula; Torulopsis; Trichoderma*, e.g. *T. reesei; Trichophyton*, e.g. *T. rubrum; Whetzelinia*, e.g. *W. scle-rotiorum; Actinosynnema*, e.g. *A mirum; Bacillus*, e.g. *B. sp. B. coagulans, B. circulans, B. megaterium, B. novalis, B. subtilis, B. pumilus, B. stearothermophilus, B. thuringiensis; Bifidobacterium*, e.g. *B. animalis, B. bifidum, B. breve, B. infantis, B. lactis, B. longum; Chryseo-bacterium; Citrobacter*, e.g. *C. freundii; Clostridium*, e.g. *C. perfringens; Diplodia*, e.g. *D. gossy-pina; Enterobacter*, e.g. *E. aerogenes, E. cloacae Edwardsiella, E. tarda; Erwinia*, e.g. *E. herbicola; Escherichia*, e.g. *E. coli; Klebsiella*, e.g. *K. pneumoniae; Kribbella*, e.g., *K. flavida; Kutzneria*, e.g., *K. albida; Miriococcum; Myrothesium; Mucor; Neurospora*, e.g. *N. crassa; Proteus*, e.g. *P. vulgaris; Providencia*, e.g. *P. stuartii; Pycnoporus*, e.g. *Pycnoporus cinnabarinus, Pycnoporus sanguineus; Ruminococcus*, e.g. *R. torques; Salmonella*, e.g. *S. typhimurium; Ser-ratia*, e.g. *S. liquefasciens, S. marcescens; Shewanella*, e.g. *S. woodyi; Shigella*, e.g. *S. flexneri; Streptomyces*, e.g. *S. antibioticus, S. castaneoglobisporus, S. violeceoruber; Trametes; Trichoderma*, e.g. *T. reesei, T. viride; Yersinia*, e.g. *Y. enterocolitica.*

In a preferred embodiment, the transglutaminase is derived from a fungus. In another preferred embodiment, the transglutaminase is derived from a bacterium.

In a preferred embodiment, the transglutaminase is derived from a strain of *Streptomyces*, preferably *S. mobaraensis* or *S. lydicus*, more preferably *S. mobaraensis.*

In a preferred embodiment, the transglutaminase to be used in a method of the invention has an amino acid sequence which is at least 50%, such as at least 60%, at least 70%, at least 80%, at least 90%, at least 95%, at least 98%, at least 99%, or 100% identical to SEQ ID NO: 1 or SEQ ID NO: 2 of the present application or a transglutaminase active fragment hereof.

In a preferred embodiment, the transglutaminase to be used in a method of the invention has an amino acid sequence which is at least 50%, such as at least 60%, at least 70%, at least 80%, at least 90%, at least 95%, at least 98%, at least 99%, or 100% identical to the mature polypeptide of SEQ ID NO: 1 or SEQ ID NO: 2.

In a more preferred embodiment, the transglutaminase to be used in a method of the invention has an amino acid sequence which is at least 50%, such as at least 60%, at least 70%, at least 80%, at least 90%, at least 95%, at least 98%, at least 99%, or 100% identical to SEQ ID NO: 1.

For purposes of the present invention, the sequence identity between two amino acid sequences is determined as the output of "longest identity" using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 6.6.0 or later. The parameters used are a gap open penalty of 10, a gap extension penalty of 0.5, and the EBLOSUM62 (EMBOSS version of BLOSUM62) substitution matrix. In order for the Needle program to report the longest identity, the -nobrief option must be specified in the command line. The output of Needle labeled "longest identity" is calculated as follows:

(Identical Residues x 100)/(Length of Alignment - Total Number of Gaps in Alignment)

The transglutaminase may be extracellular. It may have a signal sequence at its N-terminus, which is cleaved off during secretion.

The transglutaminase may be derived from any of the sources mentioned herein. The term "derived" means in this context that the enzyme may have been isolated from an organism where it is present natively, i.e. the amino acid sequence of the transglutaminase is identical to a native polypeptide. The term "derived" also means that the enzyme may have been produced recombinantly in a host organism, the recombinantly produced enzyme having either an amino acid sequence which is identical to a native enzyme or having a modified amino acid sequence, e.g. having one or more amino acids which are deleted, inserted and/or substituted, i.e. a recombinantly produced enzyme which is a mutant of a native amino acid sequence. Within the meaning of a native enzyme are included natural variants. Furthermore, the term "derived" includes enzymes produced synthetically by, e.g., peptide synthesis. The term "derived" also encompasses enzymes which have been modified e.g. by glycosylation, phosphorylation etc., whether *in vivo* or *in vitro.* With respect to recombinantly produced enzymes the term "derived from" refers to the identity of the enzyme and not the identity of the host organism in which it is produced recombinantly.

The transglutaminase may be obtained from a microorganism by use of any suitable technique. For instance, an enzyme preparation may be obtained by fermentation of a suitable microorganism and subsequent isolation of a transglutaminase preparation from the resulting fermented broth or microorganism by methods known in the art. The transglutaminase may also be obtained by use of recombinant DNA techniques. Such method normally comprises cultivation of a host cell transformed with a recombinant DNA vector comprising a DNA sequence encoding the transglutaminase and the DNA sequence being operationally linked with an appropriate expression signal such that it is capable of expressing the enzyme in a culture medium under conditions permitting the expression of the enzyme and recovering the enzyme from the culture. The DNA sequence may also be incorporated into the genome of the host cell. The DNA sequence may be of genomic, cDNA or synthetic origin or any combinations of these, and may be isolated or synthesized in accordance with methods known in the art.

The transglutaminase may be purified. The term "purified" as used herein covers transglutaminase enzyme protein essentially free from insoluble components from the production organism. The term "purified" also covers transglutaminase enzyme protein essentially free from insoluble components from the native organism from which it is obtained. Preferably, it is also separated from some of the soluble components of the organism and culture medium from which it is derived. More preferably, it is separated by one or more of the unit operations: filtration, precipitation, or chromatography.

Preferably, the transglutaminase is purified from its production organism. More preferably, the transglutaminase is purified from its production organism meaning that the transglutaminase preparation does not comprise living production organism cells.

Accordingly, the transglutaminase may be purified, viz. only minor amounts of other proteins being present. The expression "other proteins" relate in particular to other enzymes. The term "purified" as used herein also refers to removal of other components, particularly other proteins and most particularly other enzymes present in the cell of origin of the transglutaminase. The transglutaminase may be "substantially pure", i.e. free from other components from the organism in which it is produced, i.e., e.g., a host organism for recombinantly produced transglutaminase. Preferably, the transglutaminase is an at least 40% (w/w) pure enzyme protein preparation, more preferably at least 50%, 60%, 70%, 80% or even at least 90% pure.

The term transglutaminase includes whatever auxiliary compounds may be necessary for the enzyme's catalytic activity, such as, e.g., an appropriate acceptor or cofactor, which may or may not be naturally present in the reaction system.

The transglutaminase may be in any form suited for the use in question, such as, e.g., in the form of a dry powder or granulate, a non-dusting granulate, a liquid, a stabilized liquid, or a protected enzyme.

According to the present invention, transglutaminase activity may be determined by any method known in the art. For example, analysis of transglutaminase activity may be done by quantitation of the released ammonia resulting from the formation of an isopeptide bond between a free amino group (6-aminohexanoic acid) and an acyl group from a glutamine (Z-GLN-GLY) like described below:

Chemicals and enzymes used:

Z-GLN-GLY. Eg. Sigma C6154
6-aminohexanoic acid. Eg. Sigma 07260
L-Gluthatione reduced. Eg. Sigma G4251
$\alpha$-Ketoglutarate. Eg. Sigma K3752
NADH
L-GLDH. Eg. Roche 107735
MOPS. Eg. Sigma M-1254
Transglutaminase standard

Method:

To 75 myl of an enzyme solution, dissolved in 0.1 M MOPS/5 mM L-Gluthatione reduced pH 7.0, is added 50 myl of 1% 6-aminohexanoic acid, and 75 myl of 1% Z-GLN-GLY, and 75 myl of (0.44 g/L NADH, 2.5 g/L $\alpha$-Ketoglutarate in 0.1 M MOPS pH 7.0).

The absorbance at 340 nm is followed by kinetic measurement for 5 min at 30°C.

The enzyme activity is determined relative to a transglutaminase standard that has been aligned to match the transglutaminase Unit Definition (Folk, J. E. and Cole, P. W. (1966) Biochim. Bio-phys. Acta.241, 5518-5525). Result expressed as TGHU(A).

**EXAMPLES**

Overview of Examples:

1. Method for analyzing with viscometer and Texture Analyzer
2. Yoghurt - reference
3. Yoghurt made with TGase cross-linked co-precipitate from the yoghurt milk
4. Yoghurt made with TGase cross-linked Na-caseinate from the yoghurt milk
5. Yoghurt made with TGase cross-linked dried Na-caseinate

**Example 1**

The viscosity properties of the yoghurt were measured using a viscometer. The measurement is carried out using Perten RVA 4500 instrument, at 25°C at 50 rpm, for 130 sec. The viscosity (cP) is recorded for 130 seconds.

Firmness and cohesiveness was measured using texture analyzer with cylinder probe, depth 10 mm, analysis time 10 seconds.

**Example 2 - reference**

A yoghurt reference sample was prepared from skimmed milk powder (Arla Foods Denmark) dissolved in MilliQ water (52g powder to 448g water) to obtain the yoghurt milk with 3.9% protein content. The milk was cooled until next day, where it was heat treated for 10 minutes at 90°C and cooled to 40°C (fermentation temperature). The yoghurt was inoculated with yoghurt starter culture CH1 from Chr. Hansen, Denmark. Acidification for 6.5 hours until pH 4.6. Firmness = 21.96g, Cohesiveness = -7.93g. Viscosity = 1360 cP after 130 sec.

**Example 3**

A yoghurt sample with cross-linked co-precipitate was prepared. Skimmed milk powder (Arla Foods Denmark) was dissolved in MilliQ water (52g powder to 448g water) to obtain the yoghurt milk with 3.9% protein content. The milk was cooled until next day.

Next day 20% of the milk was drawn and used for the production of co-precipitate. The milk was heated to 90°C for 10 minutes and cooled to room temperature, pH was adjusted to 4.6 using 1M HCl to precipitate the protein. The mixture was heated to 55°C, and 84% whey was separated by centrifugation. The sediment was added water until same volume as before whey separation and pH adjusted to 6.7 using NaOH.

Temperature was adjusted to 55°C. *S. mobaraensis* transglutaminase was added (0.67 TGHU(A)/g milk protein) and incubated for 1 hour. The transglutaminase treated milk was added to the yoghurt milk immediately before a 90°C heat treatment. The milk was cooled to 40°C and added starter culture CH1 Chr. Hansen, Denmark. Acidification until pH 4.6. Firmness = 41.52g, Cohesiveness = -10.77g. Viscosity = 1849 cP after 130 sec.

**Example 4 - comparative**

A yoghurt sample with cross-linked Na-caseinate (similar to co-precipitate but made without heat treatment) was prepared. Skimmed milk powder (Arla Foods Denmark) was dissolved in MilliQ water (52g powder to 448g water) to obtain the yoghurt milk with 3.9% protein content. The milk was cooled until next day.

Next day 20% of the milk was drawn and used for the production of Na-caseinate without heat treatment. The milk pH was adjusted to 4.6 using 1M HCl to precipitate the protein. The mixture was heated to 55°C, and whey was separated. The sediment was added water until same volume as before whey separation and pH adjusted to 6.7 using NaOH.

Temperature was adjusted to 55°C. *S. mobaraensis* transglutaminase was added (0.67 TGHU(A)/g milk protein) and incubated for 1 hour. The transglutaminase treated milk was added to the yoghurt milk immediately before a 90°C heat treatment. The milk was cooled to 40°C and added starter culture CH1 Chr. Hansen, Denmark. Acidification until pH 4.6. Firmness = 30.21g, Cohesiveness = -5.60g. Viscosity = 1096 cP after 130 sec.

**Example 5 - comparative**

A yoghurt sample with cross-linked Na-caseinate was prepared. Skimmed milk powder (Arla Foods Denmark) was dissolved in MilliQ water (52g powder to 448g water) to obtain the yoghurt milk with 3.9% protein content. The milk was cooled until next day.

Next day the milk was mixed with a transglutaminase treated Na-caseinate solution with 3.9% protein (Na-caseinate from Arla, Denmark) in ratio 80 to 20 to produce the yoghurt milk for fermentation. The transglutaminase treated Na-caseinate solution was prepared by heating the Na-caseinate solution to 55°C, adding transglutaminase (0.67 TGHU(A)/g milk protein) and incubating for 1 hour. The transglutaminase treated Na-caseinate solution was added to the yoghurt milk immediately before a 90°C heat treatment. The milk was heat treated at 90°C for 10 minutes and cooled to 40°C and added starter culture CH1 Chr. Hansen, Denmark. Acidification until pH 4.6. Firmness = 25.82g, Cohesiveness = -9.14g. Viscosity = 1352 cP after 130 sec.

**Table 1: Summarizing the treatments in examples 2-5**

| Example | Heat treatment 90°C 10 min. | pH to 4.6 (1M HCl) | Heat to 55°C and separate whey | Add water to co-precipitate and pH to 6.7 (1M NaOH) | Tgase treatment 1h at 55°C | Mix with milk 20:80 | Heat treatment 90°C 10 min. |
|---|---|---|---|---|---|---|---|
| 2 | X | | | | | | |
| 3 | X | X | X | X | X | X | X |
| 4 | | X | X | X | X | X | X |
| 5 | | | | | X | X | X |

**Table 2: Summarizing the results of examples 2-5**

| Example | Viscosity after 130sec, cP | Firmness, g | Cohesiveness, g |
|---|---|---|---|
| 2 | 1360 | 21.96 | -7.93 |
| 3 | 1849 | 41.52 | -10.77 |
| 4 | 1096 | 30.21 | -5.60 |
| 5 | 1352 | 25.82 | -9.14 |

As can be seen in Table 2, the method of the present invention (Example 3) results in a higher viscosity, a higher firmness, and a better cohesiveness, compared to the other methods.

**Claims**

1.   A method for preparing a cross-linked milk protein co-precipitate, the method comprising:

(a) heating a milk substrate comprising casein and whey protein under conditions so that more than 50% w/w, preferably more than 80% w/w, of the whey protein is denatured;
(b) adjusting the pH of the heated milk substrate of step (a) to a pH of 4-4.7, preferably 4.5-4.7, thereby precipitating at least 80% w/w of the milk protein;
(c) separating a fraction comprising the precipitated milk protein of step (b), thereby obtaining a milk protein co-precipitate, and optionally adding water;
(d) adjusting the pH of the milk protein co-precipitate of step (c) to a pH of 6-7 thereby dissolving at least 80% w/w of the precipitated milk protein;
(e) treating the dissolved milk protein co-precipitate of step (d) with a transglutaminase thereby obtaining a cross-linked milk protein co-precipitate.

2.   The method of claim 1 which further comprises:
(f) pasteurizing the cross-linked milk protein co-precipitate of step (e).

3.   The method of any of claims 1 or 2 which further comprises:
(ff) concentrating and/or drying the cross-linked milk protein co-precipitate of step (e) or the pasteurized cross-linked milk protein co-precipitate of step (f).

4.   The method of any of the preceding claims, where in step (a), the milk substrate is heated to a temperature of 80-100°C for 1-15 minutes.

5. The method of any of the preceding claims, wherein the transglutaminase has at least 60% sequence homology to SEQ ID NO: 1.

6. A method for preparing an acidified milk product, the method comprising:

(i) mixing the cross-linked milk protein co-precipitate obtained by the method of any of claims 1-5 with a milk substrate to obtain a mixed milk substrate, wherein 10-30% of total protein in the mixed milk substrate is obtained from the cross-linked milk protein co-precipitate; and
(ii) acidifying the mixed milk substrate of step (a) to obtain an acidified milk product.

7. A method for preparing an acidified milk product, the method comprising:

(a) heating a first milk substrate comprising casein and whey protein under conditions so that more than 50% w/w, preferably more than 80% w/w, of the whey protein is denatured, preferably by heating to a temperature of 80-100°C for 1-15 minutes;
(b) adjusting the pH of the heated milk substrate of step (a) to a pH of 4-4.7, preferably 4.5-4.7, thereby precipitating at least 80% w/w of the milk protein;
(c) separating a fraction comprising the precipitated milk protein of step (b), thereby obtaining a milk protein co-precipitate, and optionally adding water;
(d) adjusting the pH of the milk protein co-precipitate of step (c) to a pH of 6-7 thereby dissolving at least 80% w/w of the precipitated milk protein;
(e) treating the dissolved milk protein co-precipitate of step (d) with a transglutaminase thereby obtaining a cross-linked milk protein co-precipitate;
(f) pasteurizing the cross-linked milk protein co-precipitate of step (e) or the mixed milk substrate of step (g);
(g) mixing the cross-linked milk protein co-precipitate of step (e) or the pasteurized cross-linked milk protein co-precipitate of step (f) with a second milk substrate to obtain a mixed milk substrate, wherein 10-30% of total protein in the mixed milk substrate is obtained from the cross-linked milk protein co-precipitate of step (e); and
(h) acidifying the mixed milk substrate of step (f) or (g) to obtain an acidified milk product.

8. The method of claim 7, wherein the mixed milk substrate is acidified to below pH 5.

9. The method of any of claims 7-8, where in step (a), the milk substrate is heated to a temperature of 80-100°C for 1-15 minutes.

10. The method of any of claims 7-9, wherein the transglutaminase has at least 60% sequence homology to SEQ ID NO: 1.

11. The method of any of claims 6-10, wherein the acidified milk product is yoghurt, set-type yoghurt, stirred yoghurt, drinking yoghurt or fermented milk.

**Patentansprüche**

1. Verfahren zur Herstellung eines vernetzten Milchprotein-Co-Präzipitat, wobei das Verfahren umfasst:

(a) Erhitzen eines Milchsubstrats, das Kasein und Molkenprotein umfasst, unter Bedingungen, so dass mehr als 50 Gew.-%, vorzugsweise mehr als 80 Gew.-%, des Molkenproteins denaturiert werden;
(b) Einstellen des pH-Werts des erhitzten Milchsubstrats aus Schritt (a) auf einen pH-Wert von 4 bis 4,7, vorzugsweise 4,5 bis 4,7, wodurch mindestens 80 Gew.-% des Milchproteins ausgefällt werden;
(c) Abtrennen eines Anteils, der das in Schritt (b) ausgefällte Milchprotein umfasst, wodurch ein Milchprotein-Co-Präzipitat erhalten wird, und gegebenenfalls Zugabe von Wasser;
(d) Einstellen des pH-Werts des Milchprotein-Co-Präzipitat aus Schritt (c) auf einen pH-Wert von 6 bis 7, wodurch mindestens 80 Gew.-% des ausgefällten Milchproteins gelöst werden;
(e) Behandeln des gelösten Milchprotein-Co-Präzipitat aus Schritt (d) mit einer Transglutaminase, wodurch ein vernetztes Milchproteinkopräzipitat erhalten wird.

2. Verfahren nach Anspruch 1, das ferner umfasst:
(f) Pasteurisieren des vernetzten Milchprotein-Co-Präzipitat aus Schritt (e).

**3.** Verfahren nach einem der Ansprüche 1 oder 2, das ferner umfasst:
(ff) Konzentrieren und/oder Trocknen des vernetzten Milchprotein-Co-Präzipitat aus Schritt (e) oder des pasteurisierten vernetzten Milchproteinkopräzipitats aus Schritt (f).

**4.** Verfahren nach einem der vorstehenden Ansprüche, wobei in Schritt (a) das Milchsubstrat 1 bis 15 Minuten lang auf eine Temperatur von 80 bis 100 °C erhitzt wird.

**5.** Verfahren nach einem der vorstehenden Ansprüche, wobei die Transglutaminase mindestens 60 % Sequenzhomologie zu SEQ ID NO: 1 aufweist.

**6.** Verfahren zur Herstellung eines ansäuern Milchprodukts, wobei das Verfahren umfasst:

(i) Mischen des durch das Verfahren nach einem der Ansprüche 1 bis 5 erhaltenen vernetzten Milchprotein-Co-Präzipitat mit einem Milchsubstrat, um ein gemischtes Milchsubstrat zu erhalten, wobei 10 bis 30 % des Gesamtproteins im gemischten Milchsubstrat aus dem vernetzten Milchproteinko-Präzipitat stammen; und
(ii) Ansäuern des gemischten Milchsubstrats aus Schritt (a), um ein ansäuern Milchprodukt zu erhalten.

**7.** Verfahren zur Herstellung eines ansäuern Milchprodukts, wobei das Verfahren umfasst:

(a) Erhitzen eines ersten Milchsubstrats, das Kasein und Molkenprotein umfasst, unter Bedingungen, so dass mehr als 50 Gew.-%, vorzugsweise mehr als 80 Gew.-%, des Molkenproteins denaturiert werden, vorzugsweise durch Erhitzen auf eine Temperatur von 80 bis 100 °C für 1 bis 15 Minuten;
(b) Einstellen des pH-Werts des erhitzten Milchsubstrats aus Schritt (a) auf einen pH-Wert von 4 bis 4,7, vorzugsweise 4,5 bis 4,7, wodurch mindestens 80 Gew.-% des Milchproteins ausgefällt werden;
(c) Abtrennen eines Anteils, der das in Schritt (b) ausgefällte Milchprotein umfasst, wodurch ein Milchprotein-Co-Präzipitat erhalten wird, und gegebenenfalls Zugabe von Wasser;
(d) Einstellen des pH-Werts des Milchprotein-Co-Präzipitat aus Schritt (c) auf einen pH-Wert von 6 bis 7, wodurch mindestens 80 Gew.-% des ausgefällten Milchproteins gelöst werden;
(e) Behandeln des gelösten Milchprotein-Co-Präzipitat aus Schritt (d) mit einer Transglutaminase, wodurch ein vernetztes Milchproteinkopräzipitat erhalten wird;
(f) Pasteurisieren des vernetzten Milchprotein-Co-Präzipitat aus Schritt (e) oder des gemischten Milchsubstrats aus Schritt (g);
(g) Mischen des vernetzten Milchproteinkopräzipitats aus Schritt (e) oder des pasteurisierten vernetzten Milchprotein-Co-Präzipitat aus Schritt (f) mit einem zweiten Milchsubstrat, um ein gemischtes Milchsubstrat zu erhalten, wobei 10 bis 30 % des Gesamtproteins im gemischten Milchsubstrat aus dem vernetzten Milchproteinkopräzipitat aus Schritt (e) stammen; und
(h) Säuern des gemischten Milchsubstrats aus Schritt (f) oder (g), um ein ansäuern Milchprodukt zu erhalten.

**8.** Verfahren nach Anspruch 7, wobei das gemischte Milchsubstrat auf einen pH-Wert unter 5 ansäuern wird.

**9.** Verfahren nach einem der Ansprüche 7 bis 8, wobei in Schritt (a) das Milchsubstrat 1 bis 15 Minuten lang auf eine Temperatur von 80 bis 100 °C erhitzt wird.

**10.** Verfahren nach einem der Ansprüche 7 bis 9, wobei die Transglutaminase mindestens 60 % Sequenzhomologie zu SEQ ID NO: 1 aufweist.

**11.** Verfahren nach einem der Ansprüche 6 bis 10, wobei das ansäuern Milchprodukt Joghurt, festes Joghurt, gerührtes Joghurt, Trinkjoghurt oder fermentierte Milch ist.

**Revendications**

**1.** Procédé de préparation d'un co-précipité de protéine de lait réticulée, le procédé comprenant :

(a) le chauffage d'un substrat laitier comprenant de la caséine et de la protéine de lactosérum dans des conditions de sorte que plus de 50 % p/p, de préférence plus de 80 % p/p, de la protéine de lactosérum sont dénaturés ;
(b) l'ajustement du pH du substrat de lait chauffé de l'étape (a) à un pH de 4 à 4,7, de préférence de 4,5 à 4,7, précipitant ainsi au moins 80 % p/p de la protéine de lait ;

(c) la séparation d'une fraction comprenant la protéine de lait précipitée de l'étape (b), obtenant ainsi un co-précipité de protéine de lait, et éventuellement l'ajout d'eau ;

(d) l'ajustement du pH du co-précipité de protéine de lait de l'étape (c) à un pH de 6 à 7, dissolvant ainsi au moins 80 % p/p de la protéine de lait précipitée ;

(e) le traitement du co-précipité de protéine de lait dissous de l'étape (d) avec une transglutaminase obtenant ainsi un co-précipité de protéine de lait réticulée.

2. Procédé selon la revendication 1 qui comprend également :

(f) la pasteurisation du co-précipité de protéine de lait réticulée de l'étape (e).

3. Procédé selon la revendication 1 ou 2 qui comprend également :

(ff) la concentration et/ou le séchage du co-précipité de protéine de lait réticulée de l'étape (e) ou le co-précipité de protéine de lait réticulée pasteurisé de l'étape (f).

4. Procédé selon l'une quelconque des revendications précédentes, où dans l'étape (a), le substrat de lait est chauffé à une température de 80 à 100 °C pendant 1 à 15 minutes.

5. Procédé selon l'une quelconque des revendications précédentes, dans lequel la transglutaminase a au moins 60 % d'homologie de séquence avec SEQ ID NO : 1.

6. Procédé de préparation d'un produit laitier acidifié, le procédé comprenant :

(i) le mélange du co-précipité de protéine de lait réticulée obtenu par le procédé selon l'une quelconque des revendications 1 à 5 avec un substrat de lait pour obtenir un substrat de lait mixte, dans lequel 10 à 30 % des protéines totales du substrat de lait mixte sont obtenues à partir du co-précipité de protéine de lait réticulée ; et

(ii) l'acidification du substrat de lait mélangé de l'étape (a) pour obtenir un produit laitier acidifié.

7. Procédé de préparation d'un produit laitier acidifié, le procédé comprenant :

(a) le chauffage d'un substrat laitier comprenant de la caséine et de la protéine de lactosérum dans des conditions de sorte que plus de 50 % p/p, de préférence plus de 80 % p/p, de la protéine de lactosérum sont dénaturés, de préférence en chauffant à une température de 80 à 100 °C pendant 1 à 15 minutes ;

(b) l'ajustement du pH du substrat de lait chauffé de l'étape (a) à un pH de 4 à 4,7, de préférence de 4,5 à 4,7, précipitant ainsi au moins 80 % p/p de la protéine de lait ;

(c) la séparation d'une fraction comprenant la protéine de lait précipitée de l'étape (b), obtenant ainsi un co-précipité de protéine de lait, et éventuellement l'ajout d'eau ;

(d) l'ajustement du pH du co-précipité de protéine de lait de l'étape (c) à un pH de 6 à 7 dissolvant ainsi au moins 80 % p/p de la protéine de lait précipitée ;

(e) le traitement du co-précipité de protéine de lait dissoute de l'étape (d) avec une transglutaminase obtenant ainsi un co-précipité de protéine de lait réticulée ;

(f) la pasteurisation du co-précipité de protéine de lait réticulée de l'étape (e) ou du substrat de lait mélangé de l'étape (g) ;

(g) le mélange du co-précipité de protéine de lait réticulée de l'étape (e) ou du co-précipité de protéine de lait réticulée pasteurisé de l'étape (f) avec un second substrat de lait pour obtenir un substrat de lait mixte, dans lequel 10 à 30 % des protéines totales du substrat de lait mixte sont obtenues à partir du co-précipité de protéine de lait réticulée de l'étape (e) ; et

(h) l'acidification du substrat de lait mélangé de l'étape (f) ou (g) pour obtenir un produit laitier acidifié.

8. Procédé selon la revendication 7, dans lequel le substrat de lait mélangé est acidifié à un pH inférieur à 5.

9. Procédé selon l'une quelconque des revendications 7 et 8, où dans l'étape (a), le substrat de lait est chauffé à une température de 80 à 100 °C pendant 1 à 15 minutes.

10. Procédé selon l'une quelconque des revendications 7 à 9, dans lequel la transglutaminase a au moins 60 % d'homologie de séquence avec SEQ ID NO : 1.

11. Procédé selon l'une quelconque des revendications 6 à 10, dans lequel le produit laitier acidifié est du yaourt, du yaourt ferme, du yaourt brassé, du yaourt à boire ou du lait fermenté.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007026053 A, Valio
- WO 2007060288 A, Valio
- WO 2014001642 A, Valio

### Non-patent literature cited in the description

- **GUYOT** ; **KULOZIK**. *International Dairy Journal*, 2011, vol. 21, 628-635
- **FARRELL et al.** Nomenclature of the Proteins of Cows' Milk - Sixth Revision. *Journal of Dairy Science*, 06 June 2004, vol. 87, 1641-1674
- **FANG QIAN** ; **JIAYUE SUN** ; **DI CAO** ; **YANFENG TUO** ; **SHUJUAN JIANG** ; **GUANGQING MU**. *Korean J Food Sci Anim Resour*, 2017, vol. 37 (1), 44-51
- **MASAO MOTOKI** ; **NORIKI NIO**. Crosslinking Between Different Food Proteins by Transglutaminase. *J. Food.Sci.*, 1983, vol. 48, 561-566
- **MARTIN P. BÖNISCH** ; **MANFRED HUSS** ; **SABINE LAUBER** ; **ULRICH KULOZIK**. Yoghurt gel formation by means of enzymatic protein cross-linking during microbial fermentation. *Food Hydrocolloids*, 2007, vol. 21 (4), 585-595
- **NEEDLEMAN** ; **WUNSCH**. *J. Mol. Biol.*, 1970, vol. 48, 443-453
- **RICE et al.** EMBOSS: The European Molecular Biology Open Software Suite. *Trends Genet.*, 2000, vol. 16, 276-277
- **FOLK, J. E.** ; **COLE, P. W.** *Biochim. Bio-phys. Acta.*, 1966, vol. 241, 5518-5525